# FASCICULE DE BREVET EUROPEEN

(11) **EP 1 323 607 B1**
(45) Date de publication et mention de la délivrance du brevet: **18.10.2006**
(21) Numéro de dépôt: 02028926.0
(22) Date de dépôt: 23.12.2002
(51) Int. Cl.: B60T 13/52, B60T 17/22

(54) **Contacteur de feux d'allumage des freins intégré sur le servomoteur d'assistance pneumatique au freinage**
Integrierter Bremslichtschalter in Bremsservo
Brake light switch integrated in brake servo

(30) Priorité: 31.12.2001 FR 0117117
(43) Date de publication de la demande: 02.07.2003
(73) Titulaire: ROBERT BOSCH GMBH, 70442 Stuttgart (DE)
(72) Inventeur: Maligne, Jean-Charles, 93300 AUBERVILLIERS (FR); Richard, Philippe, 77500 CHELLES (FR); Fourcade Jean, 77420 CHAMPS SUR MARNE (FR); Masson Olivier, 75019 PARIS (FR); Verbo Ulysse, 93600 AULNAY SOUS BOIS (FR)
(74) Mandataire: Hurwic, Aleksander Wiktor

(56) Documents cités:
- DE-A- 4 324 688
- US-A- 4 718 324

## Description

La présente invention concerne un contacteur de feux d'allumage des freins intégré sur le servomoteur d'assistance pneumatique au freinage, consistant plus précisément à utiliser un capot classique du servofrein, dans lequel on vient intégrer le contacteur de feux d'allumage des freins .

Selon la présente invention, le capot constitue une cage pour le circuit électrique de détection, circuit normalement ouvert au repos, qui se ferme lors de l'application d'une force sur la pédale du frein.

On connaît déjà des dispositifs contacteurs de feux d'allumage des freins, notamment, des dispositifs dans lesquels le contacteur de feux d'allumage des freins est situé au niveau de la pédale de frein. Le déplacement de la pédale de frein et donc le début d'une action de freinage est détecté par un interrupteur qui ferme un circuit électrique lorsque la pédale de frein vient en appui contre l'interrupteur.

Le document US 4718 324 divulgue le préambule de la revendication 1.

Néanmoins, des contacteurs de ce type présentent pour les constructeurs automobiles des inconvénients qui proviennent, notamment, du fait que le dispositif actuel est externe au servomoteur, ce qui implique un montage et un réglage par le constructeur automobile qui souhaite recevoir un système de freinage, de montage et de réglage le plus simple et le plus transparent pour lui.

C'est un but de la présente invention que de fournir un dispositif de commande d'allumage des feux de freinage comportant des moyens de détection d'une phase de freinage, disposés à l'intérieur d'un servomoteur d'assistance pneumatique au freinage.

C'est par conséquent un but de la présente invention de fournir un dispositif électrique permettant la détection du mouvement d'une pièce mobile en liaison avec la tige de poussée du servomoteur d'assistance pneumatique au freinage, elle-même sous la commande de la pédale de freinage du véhicule.

C'est aussi un but de la présente invention de fournir un tel dispositif sous la forme d'un circuit électrique fonctionnant pour commander les feux d'allumage des freins, le dit circuit, normalement ouvert au repos, étant fermé par déplacement d'une pièce mobile consécutivement au freinage.

Selon la présente invention, le circuit électrique comporte une lame conductrice, solidaire du piston du servomoteur d'assistance pneumatique au freinage sous la commande de la tige de poussée du servomoteur d'assistance pneumatique au freinage, et une lame mobile en liaison avec un ressort de rappel assurant l'ouverture du circuit au repos. En appuyant sur la pédale du frein, le piston du servomoteur d'assistance pneumatique au freinage se déplace, assurant simultanément la fermeture du circuit qui commande l'allumage des feux d'allumage des freins.

Plus précisément, le circuit électrique est composé de deux lames conductrices respectivement solidaires de deux couronnes entourant le corps du piston du servomoteur d'assistance pneumatique au freinage, l'une des extrémités dudit piston étant reliée de façon mobile à l'une des couronnes par l'intermédiaire d'un ressort de rappel disposé entre ladite couronne conductrice et un anneau conducteur fixé à ladite extrémité, ledit ressort maintenant le circuit normalement ouvert au repos.

Un avantage de cette intégration du contacteur de feux d'allumage des freins dans le servomoteur d'assistance pneumatique au freinage est d'apporter une réduction du bruit perceptible par le conducteur lors de l'application d'une force de freinage.

Les objets ci-dessus, ainsi que d'autres caractéristiques et avantages de l'invention, apparaîtront de manière plus complète au cours de la description détaillée ci-après qui est faite d'une forme particulière de réalisation, donnée à titre indicatif et non limitatif, en référence aux dessins en annexe, sur lesquels :
- la figure 1 est une vue externe du contacteur intégré sur le servomoteur d'assistance pneumatique au freinage,
- la figure 2 est une vue montrant, en coupe partielle, l'agencement des composants du circuit électrique du contacteur,
- la figure 3, est une vue agrandie de l'extrémité dudit circuit électrique,
- la figure 4, est une représentation schématique de l'association des deux lames du circuit électrique avec le corps de piston.

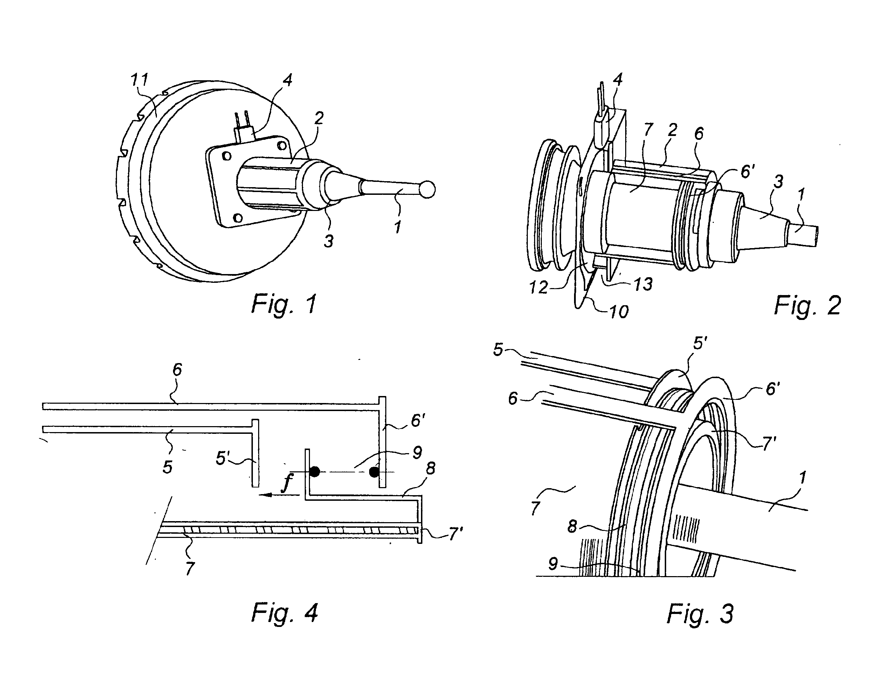

Sur les figures 1 à 4, on a utilisé les mêmes références pour désigner les mêmes éléments.

Si l'on se reporte à la figure 1, on peut voir la tige de poussée 1 liée à la pédale de frein non représentée, le capot 2 dans lequel est logé le circuit du contacteur, un soufflet 3 assurant la liaison étanche entre la tige de poussée 1 et le capot 2 dont émerge la connectique 4. On utilise un capot classique dans lequel on vient intégrer le contacteur de feux d'allumage des freins. Ce capot 2 constitue une cage pour le circuit électrique. A l'intérieur du capot 2, en coupe partielle sur la figure 2, on voit, comme illustré plus en détail sur la figure 3, deux lames de contact 5 et 6 respectivement solidaires de deux couronnes 5' et 6' respectivement, entourant le corps du piston 7 du servomoteur d'assistance pneumatique au freinage, qui se termine à l'avant par une butée 7'.

Les lames conductrices 5 et 6 et leurs couronnes 5' et 6' sont fixes. Un anneau conducteur 8 entoure le corps du piston 7 et est solidarisé à l'avant de ce dernier. Un ressort de rappel 9 est interposé entre l'anneau conducteur 8 et la couronne 6' de la lame conductrice 6. On voit donc que, sous l'action du ressort de rappel 9, le circuit est normalement ouvert au repos.

Un joint plat d'étanchéité 10 est interposé entre le capot 4 du contacteur et l'enveloppe 11. Un système de filtration 12 est prévu à l'arrière. Le fonctionnement du contacteur de feux d'allumage des freins est le suivant :

En appuyant sur la pédale de frein (non représentée), le piston 7 se déplace suivant la flèche f (figure 4), le ressort de rappel 9 est mis en extension et l'anneau conducteur 8 entre en contact avec la couronne 5' de la lame conductrice 5, le circuit se trouve alors fermé. Un signal de courant est adressé à travers la connectique 4 du circuit de commande du signal d'allumage des feux d'allumage des freins. En se référant à la figure 2, on notera que la partie gauche du dispositif selon l'invention correspond au côté compartiment moteur et non plus côté habitacle, comme dans d'autres solutions. Il résulte de cette disposition que la filtration côté compartiment moteur est silencieuse, l'air passant autour ou en un seul point bas 13 (figure 2) entre le piston 7 et la boîte 2, pour remplir sa fonction.

## Revendications

1. Dispositif de commande d'allumage des feux de freinage comportant des moyens de détection d'une phase de freinage, disposés à l'intérieur d'un servomoteur d'assistance pneumatique au freinage, les moyens de détection d'une phase de freinage étant formés par un circuit électrique, **caractérisé par le fait que** ledit circuit électrique comporte deux lames conductrices (5) et (6) respectivement solidaires de deux couronnes (5') et (6') conductrices entourant le corps du piston (7) du servomoteur d'assistance pneumatique au freinage, l'extrémité (7') du corps dudit piston étant reliée de façon mobile à la couronne (6') par l'intermédiaire d'un ressort (9) de rappel, disposé entre la couronne conductrice (6') et un anneau conducteur (8) fixé à ladite extrémité (7'), ledit ressort (9) maintenant le circuit normalement ouvert au repos

2. Dispositif de commande d'allumage des feux de freinage selon la revendication 1, **caractérisé par le fait que** le capot (2) qui constitue une cage pour le circuit, est fermé à son extrémité côté tige de poussée (1) du servomoteur d'assistance pneumatique au freinage par un soufflet étanche (3).

## Claims

1. Device for operating the brake lights comprising means for detecting a braking phase arranged inside a pneumatic brake booster, the means for detecting a braking phase being formed of an electric circuit, **characterized in that** the said electric circuit comprises two conducting blades (5) and (6) each secured to one of two respective conducting annuli (5') and (6') surrounding the body of the piston (7) of the pneumatic brake booster, one end (7') of the body of the said piston being connected in a movable fashion to the annulus (6') via a return spring (9) arranged between the conductive annuli (6') and a conducting ring (8) secured to said end (7') said spring (9) keeping the circuit normally open at rest.

2. Device for operating the brake lights according to claim 1, **characterized in that** the cap (2), which constitutes a cage for the circuit, is closed at its end at the same end as the pneumatic brake booster push rod (1) by a sealed boot (3).

## Patentansprüche

1. Vorrichtung zur Steuerung des Einschaltens der Bremsleuchten, mit Mitteln zur Erfassung einer Bremsphase, die in einem pneumatischen Servomotor zur Bremsunterstützung angeordnet sind, wobei die Mittel zur Erfassung einer Bremsphase durch einen Stromkreis gebildet sind, **dadurch gekennzeichnet, dass** der Stromkreis zwei leitende Zungen (5) und (6) aufweist, die mit zwei leitenden Kränzen (5') bzw. (6') fest verbunden sind, welche den Körper des Kolbens (7) des pneumatischen Servomotors zur Bremsunterstützung umgeben, wobei das Ende (7') des Körpers des Kolbens mittels einer Rückstellfeder (9), die zwischen dem leitenden Kranz (6') und einem am Ende (7') befestigten leitenden Ring (8) angeordnet ist, beweglich mit dem Kranz (6') verbunden ist, wobei die Feder (9) den Kreis in der Ruhestellung normalerweise offen hält.

2. Vorrichtung zur Steuerung des Einschaltens der Bremsleuchten nach Anspruch 1, **dadurch gekennzeichnet, dass** die Abdeckkappe (2), die ein Gehäuse für den Kreis bildet, an ihrem Ende auf der Seite der Schubstange (1) des pneumatischen Servomotors zur Bremsunterstützung durch einen dichten Balg (3) verschlossen ist.
